# EUROPEAN PATENT SPECIFICATION

(11) **EP 2 990 239 B1**
(45) Date of publication and mention of the grant of the patent: **30.01.2019**
(21) Application number: 15183158.3
(22) Date of filing: 31.08.2015
(51) Int. Cl.: B60G 3/20, B60G 11/28, B60G 15/12

(54) **SEMITRAILER EQUIPPED WITH INDEPENDENT WHEEL SUSPENSION AND AIR SPRINGS**
SATTELAUFLIEGER AUSGERÜSTET MIT EINZELRADAUFHÄNGUNG UND LUFTFEDERN
SEMI-REMORQUE ÉQUIPÉE AVEC SUSPENSION DE ROUE INDEPENDANT ET RESSORTS PNEUMATIQUES

(30) Priority: 01.09.2014 NL 2013397
(43) Date of publication of application: 02.03.2016
(73) Proprietor: Broshuis B.V., 8263 AD Kampen (NL)
(72) Inventor: Broshuis, Baltasar Johannes Petrus, 8263 AD Kampen (NL)
(74) Representative: Van Breda, Jacobus

(56) References cited:
- EP-A1- 0 785 098
- WO-A1-2014/178761
- DE-A1-102012 214 352
- DE-U1-202004 000 849
- DE-U1-202011 106 470
- GB-A- 2 333 576
- US-A1- 2005 247 502
- US-A1- 2010 117 320
- US-B1- 6 685 203

## Description

The invention relates to a semitrailer provided with an independent wheel suspension, said wheel suspension connecting the wheel with a central element of a chassis of the semitrailer, the wheel suspension comprising, a lower and upper link arm, that each at one end are pivoting connected to the central element of the chassis at two different positions, and at the other, opposite end are pivotally connected with a upright which is connected with a wheel hub, and in the wheel suspension connects the wheel hub with the central element of the chassis, the wheel hub being movable in at least a vertical direction, and between the wheel hub and the central element of the chassis a shock absorber and a spring element is mounted.

Such an independent wheel suspension is known and is applied in different executions in semitrailers. However it is an aim of the present invention to improve such a wheel suspension with relation to increasing the comfort on the one hand and decreasing the unsprung weight and the costs on the other hand.

A solution for this can be found in the introduction of an air spring. In the lorry industry air sprung rigid axles have been known since long. Recently Volvo Trucks A.B. has introduced a truck with an independent front wheel suspension with an air spring. In this air spring introduced by Volvo the air spring/bellow has been placed on top of the shock absorber between the link arms.

Such a construction however is very undesirable with a semitrailer. The required vertical space for such a wheel suspension is unfavourable for the semitrailer where it is important to have a loading floor that is both flat as well as having a low position. Further the maximum load is rather limited and thus the available loading capacity will be too low in certain cases.

DE 10 2012 214 352 A1 describes an independent wheel suspension for an industrial vehicle with an air spring and a damper placed next to it. The construction is however complicated and only allows an air spring of limited dimensions

GB 2 333 576 A describes an air spring for a motor vehicle that at its lower side is connected with a lower of two link arms of an independent wheel suspension. The connection of the air spring to the link arm is such that the stroke of the air spring comprises only a fraction of the stroke of the link arm. Consequently this requires a rather voluminous air spring in case a certain stiffness of the air spring is required.

US 6 685 203 B1, US 2005/247502 A1 and the late published WO 2014/178761 all describe independent wheel suspensions for heavy vehicles with two air springs, both attached to and on either side of the upright.

Thus it is a further aim of the present invention to propose a semitrailer with an air sprung independent wheel suspension that remedies the mentioned disadvantages completely or at least considerably.

This aim is being reached by a semitrailer according to claim 1. Here a suspension comprising at least one air spring is proposed, wherein the at least one air spring is placed outside the link arms, so that the at least one air spring is not being limited in its width by the link arms. Because of this the construction height can be kept low. Further to the upright a support element is connected, this support element also being connected with one end of each of the at least one air spring. Through this the complete stroke of the link arms can be transferred to the air spring, so that this is not limited in volume for obtaining the required spring stiffness. Thus a semitrailer with an independent suspension with air springs is being proposed, that combines the spring comfort of an air spring with a lower unsprung weight and a reduced construction height, so that a low and flat loading floor can be obtained while at the same time the loading capacity remains equal to that of semitrailers with conventional wheel suspension or even can be enlarged in comparison with these.

A first embodiment of the semitrailer according to the invention is indicated in claim 2. There the spring element comprises one air spring and the support element is being formed by a lever with two ends, of which one is connected to the chassis, and the other end is connected to the air spring and the lever is connected rotating to the upright at a position that lies between the two ends. This innovative construction gives an additional degree of freedom to the designed possibilities of the wheel suspension. Because of the leverage of the support element it is possible to adjust the length of the spring movement of the wheel and the stroke of the air spring to each other in an optimal way.

In another preferred embodiment of the semitrailer according to the invention, the spring element comprises two air springs, that are positioned at opposite sides of the link arms. This makes it possible to distribute the load over both air springs and this enables a considerable totally allowable load. In a possible variant of this embodiment the wheel suspension comprises more than two air springs of which the positioning is distributed as much as possible over the different sides of the link arms. In an embodiment that is constructively well executable as well as reliable of the support element this is being formed by a bracket wherein the connections of the bracket with the upright and the at least two air springs is a rigid connection. Thus the spring movement of the wheel is equally transferred to the at least two air springs.

The embodiments mentioned before are equally applicable in semitrailer provided with an independent wheel suspension wherein the upright is rotatably connected with the wheel hub around a vertical axle, so that a steerable axis can be realised.

In the case wherein the semitrailer comprises several axles and wherein at least one of these axles is steerable by means of a swivel caster steering, there is the additional advantage that these wheels have a maximum steering angle that can go up to 30°, which is an exceptionally large steering angle for swivel caster steered wheels.

The invention will now be further explained also with reference to the attached drawing, wherein:
Fig. 1 shows an example of a wheel suspension of a semitrailer according to the invention in a first embodiment; and
Fig. 2 shows an example of a wheel suspension of a semitrailer according to the invention in a second embodiment.

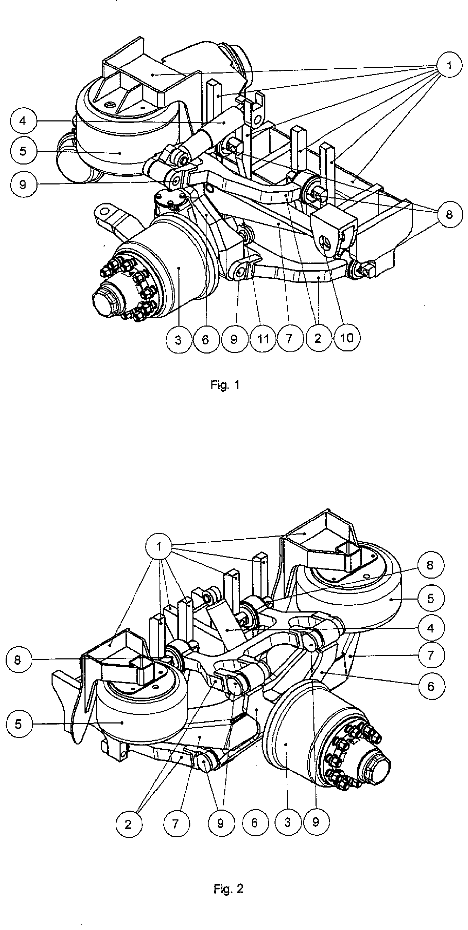

Figure 1 shows an independent wheel suspension of a semitrailer (not shown) in a schematic way. In the drawing various parts are shown of the chassis 1 of the semitrailer. It concerns notably a central element of the chassis, such as a central chassis beam or elements connected thereto. For clarity of the complete figure however in several places parts of the chassis 1 have been removed from the drawing. The reference numeral 1 has been shown at as many possible relevant parts of the chassis. The wheel suspension connects the wheel hub 3, on to which the wheel (not shown) is to be mounted, to the chassis 1 via 2 link arms 2 that are positioned one above the other. The two links arms, also called wishbones, are connected at one side, away from the wheel, to the chassis 1 with pivotable connections 8 and at the other side, near to the wheels with pivotable connections 9 to a upright 6, to which the wheel hub 3 is attached. For completeness it should be mentioned that the term upright indicates the connecting element between the wheel hub and both link arms. Of such a upright in practice many executions are known. The word upright is justified because there is a lower and an upper swivel arm. Through these pivoting couplings 8, 9 the wheel hub 3 can move in vertical directions with respect to the chassis 1. Shock absorber 4 at one end is pivotingly coupled to the upright 6 and at its other end pivotingly coupled to the chassis 1. Further a single air spring 5 is shown that at its upper side is attached to the chassis 1 and at its lower side is being carried by a support element 7. The air spring 5 is placed outside the both link arms 2 and next to shock absorber 4. In this way the air spring is not limited in its width by an internal space inside the link arms 2. Also a part of the vertical space for the air spring 5 is not taken away by the shock absorber 4, as is the case with the known air sprung independent wheel suspension for trucks. In this embodiment support element 7 is executed as a lever 7. At one end the lever 7 is pivotingly coupled 10 to the chassis 1 and on the other, opposing, end, lever 7 carries air spring 5. At a point that is at a certain distance between these two ends lever 7 is attached to upright 6 by means of a pivotable coupling 11. This lever 7 transfers a vertical movement of the wheel hub 3 with respect to the chassis 1 to the lower side of air spring 5, that with its opposite is being attached to the chassis. Thus, this movement transferred by lever 7 to air spring 5 causes the spring force to be delivered by the air spring 5. Dependent on the choice of the point of coupling 11 of the lever 7 to upright 6, the vertical movement of the wheel is amplified or attenuated to a larger or lesser extent. Thus this makes it possible to set the spring constant of the spring system, in addition to the dimensioning of the air spring itself. Thus this gives an additional degree of freedom in designing the spring system in such a way that an optimal spring characteristic can be reached.

Fig. 2 shows a second embodiment of an independent wheel suspension of a semitrailer according to the invention. As in fig. 1 and fig. 2 shows several parts of a chassis 1 of a semitrailer (not shown). Also in fig. 2 for clarity in several places parts of the chassis 1 have been removed from the drawing. Further fig. 2 shows wheel hub 3 with link arms 2 and pivoting couplings 8, 9, similar to fig. 1 so that these need not to be discussed in further detail. It needs to be mentioned however, that in fig. 2 only 2 of the 4 couplings 8 and three of the four couplings 9 are visible. Fig. 2 also shows shock absorber 4 placed between wheel hub 3 and chassis 1. Further can be seen from fig. 2 that the wheel suspension comprises two air springs 5, situated at both sides outside the both link arms 2, and next to shock absorber 4. A vertical movement of the wheel with respect to the chassis 1 is being transferred by this wheel suspension to the air springs 5 by means of support element 7, that in this embodiment of the invention is executed as a bracket 7. Bracket 7 at each of its two ends is rigidly attached to the lower side of one of the two air springs 5. In the middle between the connection to the air springs 5, bracket 7 is rigidly connected to upright 6 and through this with wheel hub 3, so that the vertical movements of the wheel with respect to the chassis 1 are directly transferred by bracket 7 to the lower side of both air springs 5. Because both air springs are attached to the chassis 1 with their upper side, this movement also causes the spring force in air springs 5. Because at this embodiment of the semitrailer according to the invention there are two air springs active, this provides for a wheel suspension with a potentially high load carrying capacity.

With the two embodiments described before, two examples are given of a semitrailer provided with an independent wheel suspension with air springs, that combine the comfort and low weight of an air spring to a small construction height, as required with an subway trailer.

### List of preference numbers

- 1: chassis
- 2: link arm, wishbone
- 3: wheel hub
- 4: shock absorber
- 5: spring element, air spring
- 6: upright
- 7: support element, lever, bracket
- 8: pivoting couplings, to chassis
- 9: pivoting couplings, to wheel hub
- 10: pivotable coupling lever (support element) - chassis
- 11: pivotable coupling lever (support element) - upright

## Claims

1. Semitrailer provided with an independent wheel suspension for a semitrailer, the independent wheel suspension connecting a wheel with a central element (1) of a chassis of the semitrailer, the wheel suspension comprising, a lower and an upper link arm (2), that each at one end (8) are pivotingly connected to the central element (1) of the chassis in two different positions and at the other, opposing end (9) are pivotingly connected to an upright (6) that is connected to a wheel hub (3), wherein the wheel suspension connects the wheel hub (3) to the central element (1) of the chassis, moveable in at least a vertical direction, and between the wheel hub (3) and the central element (1) of the chassis a shock absorber (4) and a spring element (5) are mounted, **characterized in that**, the spring element (5) comprises at least one air spring (5) that is placed outside the lower and upper support arms (2) and that to the upright (6) further a support element (7) is attached, wherein the support element (7) is also connected to one end of each of the at least one air spring (5).

2. Semitrailer according to claim 1, **characterized in that** the spring element (5) comprises one air spring (5) and the support element (7) is formed by a lever (7) with two ends, of which one end (10) is attached to the chassis (1) and the other end is attached to the air spring (5) and the lever (7), at a position (11) that lies between its two ends, is rotatingly attached to the upright (6).

3. Semitrailer according to claim 1, **characterized in that** the spring element (5) comprises at least two air springs (5), of which at least two (5) are positioned at opposite sides of the support arms (2).

4. Semitrailer according to claim 3, **characterized in that** the support element (7) is formed by a bracket (7) wherein the connections of the bracket (7) to the upright (6) and to the at least two air springs (5) is a rigid connection.

5. Semitrailer according to one of the claims 1 to 4, wherein the upright (6) is connected to the wheel hub, rotatable around a vertical axis.

6. Semitrailer according to anyone of the previous claims, wherein at least one of the axles is being steerable.

7. Semitrailer according to anyone of the previous claims, wherein the semitrailer comprises more axles and wherein at least one of the axles is steered by means of a swivel caster steering.

## Patentansprüche

1. Sattelauflieger, der mit einer Einzelradaufhängung für einen Sattelauflieger ausgestattet ist, wobei die Einzelradaufhängung ein Rad mit einem zentralen Element (1) eines Chassis des Sattelaufliegers verbindet, wobei die Radaufhängung einen unteren und einen oberen Verbindungsarm (2) aufweist, die jeweils an einem Ende (8) drehbar mit dem zentralen Element (1) des Chassis in zwei unterschiedlichen Positionen verbunden sind und an dem anderen, gegenüberliegenden Ende (9) drehbar mit einer Stütze (6) verbunden sind, der mit einer Radnabe (3) verbunden ist, wobei die Radaufhängung die Radnabe (3) mit dem zentralen Element (1) des Chassis in wenigstens einer vertikalen Richtung beweglich verbindet und zwischen der Radnabe (3) und dem zentralen Element (1) des Chassis ein Stoßdämpfer (4) und ein Federelement (5) montiert sind,
**dadurch gekennzeichnet, dass**
das Federelement (5) wenigstens eine Luftfeder (5) aufweist, die außerhalb der unteren und oberen Tragarme (2) angeordnet ist, und dass an der Stütze (6) des Weiteren ein Stützelement (7) angebracht ist, wobei das Stützelement (7) auch mit einem Ende von jeder der wenigstens einen Luftfeder (5) verbunden ist.

2. Sattelauflieger nach Anspruch 1,
**dadurch gekennzeichnet, dass**
das Federelement (5) eine Luftfeder (5) aufweist und das Stützelement (7) durch einen Hebel (7) mit zwei Enden gebildet ist, von dem ein Ende (10) an dem Chassis angebracht ist und das andere Ende an der Luftfeder (5) angebracht ist und der Hebel (7) an einer Position (11), die zwischen seinen zwei Enden liegt, drehbar an der Stütze (6) angebracht ist.

3. Sattelauflieger nach Anspruch 1,
**dadurch gekennzeichnet, dass**
das Federelement (5) wenigstens zwei Luftfedern (5) aufweist, von denen wenigstens zwei (5) an gegenüberliegenden Seiten der Tragarme (2) angeordnet sind.

4. Sattelauflieger nach Anspruch 3,
**dadurch gekennzeichnet, dass**
das Stützelement (7) durch ein Halteelement (7) gebildet ist, wobei die Verbindungen des Halteelements (7) mit der Stütze (6) und mit den wenigstens zwei Luftfedern (5) eine starre Verbindung ist.

5. Sattelauflieger nach einem der Ansprüche 1 bis 4, wobei die Stütze (6) mit der Radnabe um eine vertikale Achse drehbar verbunden ist.

6. Sattelauflieger nach einem der vorhergehenden Ansprüche, wobei wenigstens eine der Achsen lenkbar ist.

7. Sattelauflieger nach einem der vorhergehenden Ansprüche, wobei der Sattelauflieger mehrere Achsen aufweist, und wobei wenigstens eine der Achsen mittels einer Lenkrollenlenkung gelenkt ist.

## Revendications

1. Semi-remorque équipé d'une suspension de roue indépendante pour semi-remorque, la suspension de roue indépendante raccordant une roue avec un élément central (1) d'un châssis de la semi-remorque, la suspension de roue comprenant des bras de liaison inférieur et supérieur (2), qui, chacun à une extrémité (8) sont reliés de manière pivotante à l'élément central (1) du châssis dans deux positions différentes et à l'autre extrémité (9), opposée, sont reliés de manière pivotante à un montant (6) qui est relié à un moyeu de roue (3), la suspension de roue raccordant le moyeu de roue (3) à l'élément central (1) du châssis, mobile dans au moins une direction verticale, et entre le moyeu de roue (3) et l'élément central (1) du châssis, un amortisseur et un élément à ressort (5) sont montés, **caractérisé en ce que**, l'élément à ressort (5) comprend au moins un ressort à air (5) qui est placé à l'extérieur des bras de support inférieur et supérieur (2) et **en ce qu'**au montant (6) est fixé, en outre, un élément de support (7), l'élément de support (7) étant également relié à une extrémité de chacun des au moins un ressort à air (5).

2. Semi-remorque selon la revendication 1, **caractérisé en ce que** l'élément à ressort (5) comprend un ressort à air (5) et l'élément de support (7) est formé par un levier (7) doté de deux extrémités, une extrémité (10) étant fixée au châssis (1) et l'autre extrémité étant fixée au ressort à air (5) et le levier (7), en une position (11) qui est entre ses deux extrémités, est fixé de manière à pouvoir tourner au montant (6).

3. Semi-remorque selon la revendication 1, **caractérisé en ce que** l'élément à ressort (5) comprend au moins deux ressorts à air (5), au moins deux d'entre eux (5) étant situés aux côtés opposés des bras de support (2).

4. Semi-remorque selon la revendication 3, **caractérisé en ce que** l'élément de support (7) est formé par un étrier (7), les connexions de l'étrier (7) au montant (6) et au moins aux deux ressorts à air (5) étant une connexion rigide.

5. Semi-remorque selon l'une des revendications 1 à 4, dans lequel le montant (6) est raccordé au moyeu de roue, apte à tourner autour d'un axe vertical.

6. Semi-remorque selon l'une quelconque des revendications précédentes, dans lequel au moins l'un des essieux est directeur.

7. Semi-remorque selon l'une quelconque des revendications précédentes, dans lequel le semi-remorque comprend davantage d'essieux et dans lequel au moins un des essieux est dirigé au moyen d'une direction à roue pivotant.
